Europäisches Patentamt

European Patent Office

Office européen des brevets

(19)

(11) Publication number: **0 243 166**
**A2**

## EUROPEAN PATENT APPLICATION

(12)

(21) Application number: 87303529.9

(22) Date of filing: 22.04.87

(51) Int. Cl.⁴: **C 01 B 33/18**

(30) Priority: 24.04.86 GB 8610023

(43) Date of publication of application:
28.10.87 Bulletin 87/44

(84) Designated Contracting States:
AT BE CH DE ES FR GB GR IT LI NL SE

(71) Applicant: UNILEVER PLC
Unilever House Blackfriars P.O. Box 68
London EC4P 4BQ (GB)

(84) Designated Contracting States: GB

(71) Applicant: UNILEVER NV
Burgemeester s'Jacobplein 1 P.O. Box 760
NL-3000 DK Rotterdam (NL)

(84) Designated Contracting States:
BE CH DE ES FR GR IT LI NL SE AT

(72) Inventor: Garvey, Michael Joseph
"The Hollies" Nigel Road
Heswall Wirral Merseyside L60 1XU (GB)

Griffiths, Ian Charles
24 Quarry Avenue
Bebington Wirral Merseyside L63 3HS (GB)

(74) Representative: Thomas, Susan Margaret et al
UNILEVER PLC Patents Division P.O. Box 68 Unilever
House
London EC4P 4BQ (GB)

(54) Silica platelets.

(57) This invention relates to positively-charged silica platelets
and a process for their preparation from modified silica sols by
formation of a silica film at an interface.

EP 0 243 166 A2

**Description**

## SILICA PLATELETS

This invention relates to the preparation of silica platelets. More particularly, the invention relates to novel, positively-charged silica platelets or planar aggregates of positively-charged silica and dispersions and structures of positively-charged silica platelets and to processes for their preparation.

It has now been found that positively-charged silica platelets can be prepared by interfacial aggregation of positively-charged polyvalent metal-oxygen compound coated silica particles in the presence of trace amounts of anionic surfactants to render the particles partially hydrophobic.

According to a first aspect of the present invention there is provided platelets comprising positively-charged particles consisting of a dense silica core coated with a polyvalent metal-oxygen compound, the platelets consisting of at least a monolayer of the particles and having a dimension in the planar direction of at least 10 times their thickness.

The particles can either comprise dense silica cores which are individually coated with a polyvalent metal-oxygen compound or the particles comprising the platelets can be coated once the platelets are formed. The poly-valent metal-oxygen compound is preferably selected from the group comprising metal oxides, metal hydroxides, hydrated metal oxides and mixtures thereof, the metal in each case having a valence of 3 to 4. Preferred examples include alumina, titania, zirconia, thoria and mixtures thereof.

The particles comprising the platelets suitably have a dimension in the range of from 5 to 150nm. The platelets can thus have a planar dimension in the range of from 0.05 to 20µm.

According to a second aspect of the present invention there is provided a process for the preparation of silica-containing platelets, characterised by forming a dispersion of charged silica-containing particles and adding a surfactant of opposite charge to cause the particles to aggregate at an interface to form platelets wherein the particles are coated with a polyvalent metal-oxygen compound.

The particles can either be coated with the polyvalent metal-oxygen compound prior to forming the platelets or the particles can be coated in the form of the platelets. In the former case a dispersion is suitably formed of positively-charged particles consisting of a dense silica core coated with a polyvalent metal-oxygen compound and an anionic surfactant is added to the dispersion to cause the particles to aggregate at the interface to form platelets. In the latter case negatively-charged silica platelets can be formed at the interface by the addition of cationic surfactant to a negatively-charged silica sol and subsequently the negative platelets comprising the silica particles can be rendered positive by a metal-oxide coating process. Details of the preparation of the negatively-charged silica platelets are found in United States Specification 2801902 and a suitable coating process for rendering the negative platelets positive by coating with a metal-oxide is described within United States Specification 3007878.

The dispersion is in the form of a sol with the silica-containing particles being in the form of a colloidal material and having dimensions in the range 5 to 150nm. Suitably the interface is agitated so as to rupture the interface.

It is thought that the silica particles gel to form a monolayer replica of the interface at which they have been formed. This interface may be at a gas, oil or hydrophobic solid interface to form a compact monolayer of silica spheroids. Agitation of the dispersion to rupture the interface, or to detach the monolayer from a hydrophobic substrate, which constitutes an interface, is thought to create a fresh interface for further gelation, resulting in the eventual conversion of the silica sol to silica platelets. It is thought, therefore, that the platelets or aggregates are broken replicas of the interface. The interface may or may not be planar, but since the geometry of the interface is, in general, large in comparison with the fractured replica silica aggregates, these aggregates appear essentially planar in structure and, hence, may be referred to as platelets.

The positively-charged silica particles which make up the platelets are typified, for example, by Kieselsol 200S (ex Bayer) and are further described within United States Specification 3 000 878 by Alexander et al. Kieselsol 200S is a 30% w/w dispersion of approximately 15 nm particles in water at pH 3.4. The particles consist of a silica core treated with basic aluminium chloride to provide a positively-charged coating.

The concentration of positive silica sol in combination with the anionic surfactant is less than 30% w/w and preferably less than 10% w/w. The concentration of positive silica particles is suitably more than 0.001% w/w, more preferably 0.1 to 10% w/w. The pH of the dispersion is ideally maintained between pH 3.0 to 6.0. At higher pH gelation of the silica occurs in the bulk of the dispersion. At lower pH the positive coating is attacked by acid with loss of positive charge.

Suitable anionic surfactants can readily be selected from the numerous anionic surfactants available by their ability to form a skin at the air/water interface when mixed together with the positively-charged silica particles. More specifically, suitable anionic surfactants are water-soluble or solubilisable long-chain alkyl or alkyl aryl sulphate, sulphonate and phosphate salts and mixtures thereof. Typical anionic surface active agents include alkali metal alkyl sulphates and sulphonates such as sodium tetra decyl sulphonate, sodium hexadecyl sulphonate and sodium dodecyl sulphate.

The amount of anionic surfactant employed in formation of the platelets is less than that required for monolayer coverage of the particles which is given by the expression $3/(r.\rho.A.N.)$ moles $g^{-1}$ where r is the particle radius, $\rho$ is the particle density, A is the area of the surface occupied by a surfactant molecule and N is Avogadro's number. The expression approximates to $0.006/r(nm)$ moles of surfactant per gram of particles.

The amount of anionic surfactant is, therefore, less than 0.006/r moles of surfactant per gram of particles when r is the particle radius in nanometers. In practice, one would use in the order of a few per cent of the above amount suitably an amount within the range 0.1 to 100mg of surfactant per gram of silica-containing particles, for example, 0.003 g of surfactant per gram of silica.

The positively-charged silica platelets of the invention have, in part, been described above as broken replicas. Examination by electron microscopy reveals the structure to be essentially a planar layer or layers of random packed oxide particles. The close contact of two or more platelets may result in a structure of multilayers or clusters of planar oxide particles. The platelet slurry may be used directly or if preferred in a dried state, eg freeze dried, spray dried or evaporated.

The present platelets have a wide variety of applications. In general they can be used in any application in which finely divided clay is conventionally employed. The present particles can find particular applications as surface coatings, thickeners, fillers and pigments and can thus be employed in a wide range of industries including paper-making for example adding to the paper coating or paper pulp with pigments, fillers, binders or flocculants.

A slurry of the present platelets can be spray-dried suitably with an air flow at a temperature from 130 to 140°C and a dispersion having a silica concentration of less than 20% w/w. The resulting product comprises spheroidal, porous silica structures having both macro-and meso-pores and comprising a cluster of silica platelets, said platelets generating the macro-pores in the spaces between them and the meso-pores being generated by the spaces between the silica particles forming the platelets, said meso-pores interlink the macro-pores. Such structures have a high internal surface area and porosity and find uses as carriers and supports in areas such as chromatography, separation and catalysis. Further details of these structures are found in our co-pending application of even date claiming priority from GB 8610024.

Embodiments of the present invention will now be described by way of example only with reference to the following Examples.

## Example 1

A positive-charged aluminium oxide coated silica sol (Kieselsol 200S ex Bayer) containing 10% by weight $SiO_2$ having a pH of 5.3 was mixed with an aqueous solution of sodium tetradecyl sulphonate to generate a mixture containing 5% w/w silica sol and 0.015% w/w surfactant at a pH of 5.1. This dispersion was refluxed for about 5 hours during which time the pH dropped to 3.6, and the dispersion became increasingly turbid.

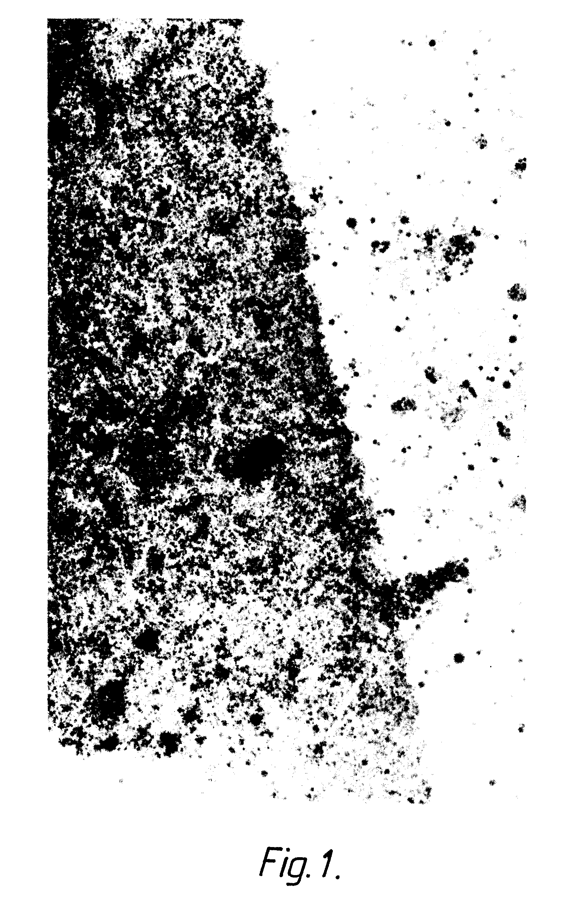

Examination of the material of the dispersion by transmission electron microscopy showed the presence of two-dimensional planar aggregates of random packed silica particles. The dimensions of the platelets were of the order of one or two particles thick and up to approximately 15 micrometers in width. Fig. 1 is a reproduction of the transmission electron microscopy of a platelet at a magnification of 50,000.

## Example 2

A positively-charged aluminium oxide coated silica sol sold under the name Kieselsol 200S ex Bayer and containing 10% by weight of silica and having a pH of 4.2 was mixed with sodium hexadecyl sulphonate solution to generate a partly hydrophobic silica sol dispersion containing 5% w/w $SiO_2$ and 0.015% w/w surfactant at a pH of 5.1. This dispersion was boiled under reflux whereupon the pH dropped to 3.6. Boiling was continued for $5^1/_2$ hours to produce positive charged silica plates.

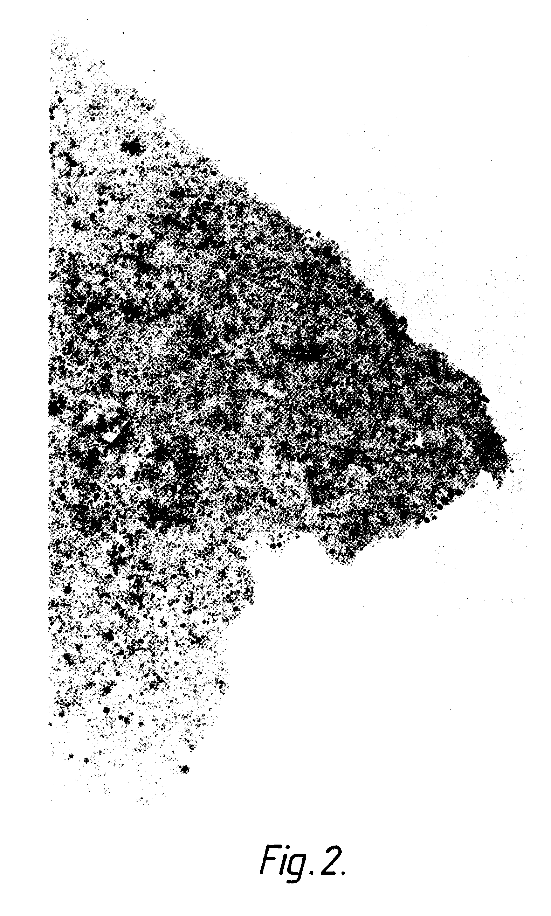

Examination by transmission electron microscopy showed the presence of platelet material as described in Example 1. Fig. 2 is a reproduction of the transmission electron microscopy of a platelet at a magnification of 50,000.

## Example 3

A positively-charged aluminium oxide coated silica sol sold under the name Kieselsol 200S ex Bayer and containing 10% by weight of silica and having a pH of 4.2 was mixed with sodium dodecyl sulphate solution to generate a partly hydrophobic silica sol dispersion containing 5% w/w $SiO_2$ and 0.015% w/w surfactant at a pH of 4.2. This dispersion was boiled under reflux and the pH was adjusted to 4.8 with sodium hydroxide. Boiling was continued for $4^1/_2$ hours to produce positively-charged silica plates.

Examination by transmission electron microscopy showed the presence of platelet material as described in Example 1.

## Example 4

A positively-charged aluminium oxide coated silica sol sold under the name Kieselsol 200S ex Bayer and containing 10% by weight of silica and having a pH of 4.2 was mixed with sodium tetradecyl sulphonate solution to generate a partly hdrophobic silica sol dispersion containing 5% w/w $SiO_2$ and 0.015% w/w surfactant at a pH of 4.1. This dispersion was boiled under reflux and the pH was adjusted to 4.0 with sodium hydroxide. Boiling was continued for 4 hours to produce positively-charged silica plates. The formation of positively-charged silica plates was shown to have occurred by the appearance of pearlescence within the dispersion.

Example 5

A positively-charged aluminium oxide coated silica sol sold under the name Kieselsol 200S ex Bayer and containing 10% by weight of silica and having a pH of 4.2 was mixed with sodium tetradecyl sulphonate solution to generate a partly hydrophobic silica sol dispersion containing 5% w/w $SiO_2$ and 0.015% w/w surfactant at a pH of 4.1. This dispersion was boiled under reflux and the pH was adjusted to 5.0 with sodium hydroxide. Boiling was continued for $5^1/_2$ hours to produce positively-charged silica plates. The formation of positively-charged silica plates was shown to have occurred by the appearance of pearlescence within the dispersion.

Example 6

A positively-charged aluminium oxide coated silica sol sold under the name Kieselsol 200S ex Bayer and containing 10% by weight of silica and having a pH of 4.2 was mixed with sodium tetradecyl sulphonate solution to generate a partly hydrophobic silica sol dispersion containing 5% w/w $SiO_2$ and 0.05% w/w surfactant at a pH of 4.2. This dispersion was boiled under reflux and the pH was adjusted to 4.9 with sodium hydroxide. Boiling was continued for 1 hour to produce positively-charged silica plates. The formation of positively-charged silica plates was shown to have occurred by the appearance of pearlescence within the dispersion.

Example 7

A positively-charged aluminium oxide coated silica sol sold under the name Kieselsol 200S ex Bayer and containing 10% by weight of silica and having a pH of 4.2 was mixed with sodium tetradecyl sulphonate solution to generate a partially hydrophobic silica sol dispersion containing 5% w/w $SiO_2$ and 0.033% w/w surfactant at a pH of 4.2. This dispersion was boiled under reflux and the pH was adjusted to 4.8 with sodium hydroxide. Boiling was continued for 5 and a quarter hours to produce positively-charged silica plates.

Examination by transmission electron microscopy showed the presence of platelet material as described in Example I.

Example 8

A known weight of cetyl trimethyl ammonium bromide solution (0.03% w/w) was added with rapid stirring to an equal weight of an aqueous dispersion of a negative silica sol (Ludox HS40 ex Du Pont, 10% w/w $SiO_2$). The resulting dispersion (5% w/w $SiO_2$, 0.015% w/w Surfactant was boiled under reflux for 5 hours to produce negatively charged silica plates.

A portion of the platelet dispersion was diluted to 0.1% w/w solids and the electrophoretic mobility of the platelets was determined, using a Rank Microelectrophoresis apparatus, as a function of aluminium chlorhydrate (AlCH) concentration in the range 0 to 50% aluminium chlorhydrate (based on $SiO_2$) at pH 4.2 $\pm$ 0.1.

The results were as follows:

| % AlCH (based on $SiO_2$) | 0 | $5.10^{-4}$ | $5.10^{-3}$ | $5.10^{-2}$ | $5.10^{-1}$ | 5 | 50 |
|---|---|---|---|---|---|---|---|
| Electrophoretic Mobility ($\mu$) | −2 | −2 | −2 | <−1 | 0 | +3 | +6 |

Example 9

A known weight of cetyl trimethyl ammonium bromide solution (0.03%) was added, with rapid stirring, to an equal weight of an aqueous dispersion of a negative silica sol (Ludox HS40 ex Du Pont, 10% w/w $SiO_2$). The resulting dispersion (5% w/w $SiO_2$, 0.015 w/w surfactant) was boiled, under reflux, for 5 hours to produce negatively-charged silica plates.

The platelet dispersion was then rendered positive by adsorption of hydrolysed (cationic) aluminium ions resulting from the addition of aluminium chlorhydrate solution to the dispersion at pH 4.2 (at a ratio of aluminium chlorhydrate to silica of 0.07:1 by weight).

The aluminium oxide modified platelet dispersion was dialysed at pH 4.2 for two weeks to remove any free aluminium species.

4

## Claims

1. Silica platelets characterised in that the platelets comprise positively-charged particles consisting of a dense silica core coated with a polyvalent metal-oxygen compound, the platelets consisting of at least a monolayer of the particles and having a dimension in the planar direction of at least 10 times their thickness.

2. Silica platelets according to claim 1 wherein the poly-valent metal-oxygen compound is selected from the group comprising metal oxides, metal hydroxides, hydrated metal oxides and mixtures thereof, the metal in each case having a valance of 3 to 4.

3. Silica platelets according to claim 2 wherein the poly-valent metal-oxygen compound is selected from the group comprising alumina, titania, zirconia, thoria and mixtures thereof.

4. Silica platelets according to any one of the preceding claims wherein the silica particles have a dimension in the range of 5 to 150nm.

5. Silica platelets according to any one of the preceding claims having planar dimensions in the range of from 0.05 to 20μm.

6. A process for the preparation of silica-containing platelets, characterised by forming a dispersion of charged silica-containing particles and adding a surfactant of opposite charge to cause the particles to aggregate at an interface to form the platelets, wherein the particles are coated with a polyvalent metal-oxygen compound.

7. A process according to claim 6 comprising forming a dispersion of positively-charged particles consisting of a dense silica core coated with a polyvalent metal-oxygen compound and adding an anionic surfactant to cause the particles to aggregate at an interface to form the platelets.

8. A process according to claim 6 comprising adding a cationic surfactant to a negatively-charged silica sol to cause the particles to aggregate at an interface to form platelets and coating the platelets with a metal-oxide.

9. A process according to any one of claims 6 to 8 wherein the dispersion is agitated so as to rupture the interface.

10. A process according to any one of claims 6 to 9 wherein the polyvalent metal-oxygen compound is selected from the group comprising alumina, titania, zirconia, thoria and mixtures thereof.

11. A process according to any one claims 6 to 10 wherein the dispersion has a concentration of silica-containing particles in the range of from 0.001 to 30% w/w and a concentration of surfactant in the range 0.1 to 100g per gram of silica-containing particles.

Fig.1.

*Fig.2.*